# EUROPEAN PATENT APPLICATION

(11) **EP 3 421 360 A1**
(43) Date of publication of application: **02.01.2019**
(21) Application number: 18169774.9
(22) Date of filing: 27.04.2018
(51) Int. Cl.: B64C 27/12, B64C 27/82, B64D 35/00, B64C 27/10

(54) **INDEPENDENT PROPELLER/MAIN ROTOR SPEED CONTROL FOR X2 TECHNOLOGY**

(30) Priority: 28.06.2017 US 201762526029 P
(71) Applicant: Sikorsky Aircraft Corporation, Stratford, CT 06615 (US)
(72) Inventor: Geiger, Derek H., Wilton, CT 06897 (US); Wulff, Ole, Ansonia, CT 06401 (US); Litwin, Jonathan Aaron, West Haven, CT 06516 (US); Strauss, Michael Peter, New Haven, CT 06511 (US)
(74) Representative: Schmitt-Nilson Schraud Waibel Wohlfrom Patentanwälte Partnerschaft mbB

(57) **Abstract**

16. A rotary-wing aircraft and system for controlling a flight of the rotary-wing aircraft. The aircraft includes a main rotor, a propeller and a variable speed transmission for transferring power from the main rotor to the propeller. A propeller command module controls operation of the variable speed transmission. The propeller command module varies a transfer of power from the main rotor to the propeller.

## Description

There are Government rights associated with this matter, contract # W911W6-14-2-0005.

### BACKGROUND OF THE INVENTION

The present invention is directed to power transmission between a main rotor of a rotary-wing aircraft and a propeller of the rotary-wing aircraft and, in particular, to a system for providing a variable transmission to control a ratio of rotor speeds between the main rotor and the propeller.

Rotary-wing aircraft include engines that provide torque to rotate a main rotor and thereby provide lift to the aircraft. A set of propeller blades can be placed at the rear of the aircraft in order to provide forward thrust to the aircraft. The propeller and the main rotor are coupled through a constant speed gearbox. Due to their coupling via the constant speed gearbox, a reduction in a main rotor speed at a high speed forward flight causes a simultaneous reduction a propeller speed, causing a loss of forward thrust, which may or may not be desirable. Furthermore, the efficiency of both the main rotor and the propeller can be optimized by operating each system at independent rotational speeds. Thus, there is a need to be able to vary speeds of the main rotor and the propeller independently.

### SUMMARY OF THE INVENTION

According to one embodiment of the present invention, a rotary-wing aircraft, including: a main rotor; a propeller; a variable speed transmission for transferring power from the main rotor to the propeller; and a propeller command module that controls operation of the variable speed transmission.

According to another embodiment of the present invention, a system for controlling a flight of a rotary-wing aircraft, including: a variable speed transmission for transferring power from a main rotor of the aircraft to a propeller of the aircraft; and a propeller command module that controls operation of the variable speed transmission to vary a transfer of power from the main rotor to the propeller. According to an embodiment, a rotary-wing aircraft comprises such system for controlling a flight of the rotary-wing aircraft. Further features and embodiments are described in the dependent claims which each may be applied, and may also be combined interchangeably, with both the rotary-wing aircraft and the system for controlling a flight of a rotary-wing aircraft.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 depicts an exemplary embodiment of a coaxial rotary wing, vertical takeoff and land (VTOL) aircraft;
FIG. 2 shows a schematic diagram of a flight system for providing a variable speed transmission to a rotary-wing aircraft such as the exemplary aircraft of FIG. 1.

### DETAILED DESCRIPTION

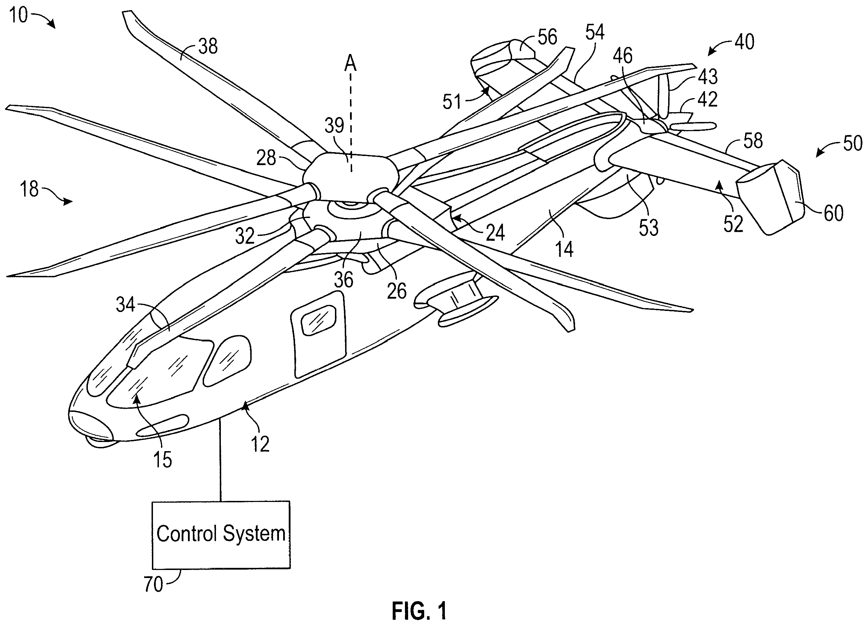

Referring now to the Figures, where the invention will be described with reference to specific embodiments, without limiting same, FIG. 1 depicts an exemplary embodiment of a coaxial rotary wing, vertical takeoff and land (VTOL) aircraft 10. The aircraft 10 includes an airframe 12 with an extending tail 14. A dual, counter rotating, coaxial main rotor assembly 18 is located at the airframe 12 and rotates about a main rotor axis, A. In an exemplary embodiment, the airframe 12 includes a cockpit 15 having two seats for flight crew (e.g., pilot and co-pilot) and six seats for passengers (not shown). Main rotor assembly 18 is driven by a power source, for example, one or more engines 24 via a main rotor gearbox 26. Main rotor assembly 18 includes an upper rotor assembly 28 driven in a first direction (e.g., counter-clockwise) about the main rotor axis, A, and a lower rotor assembly 32 driven in a second direction (e.g., clockwise) about the main rotor axis, A, opposite to the first direction (i.e., counter rotating rotors). Upper rotor assembly 28 includes a first plurality of rotor blades 38 supported by a first rotor hub 39. Lower rotor assembly 32 includes a second plurality of rotor blades 34 supported by a second rotor hub 36. The first plurality of rotor blades 38 rotate through a first rotor disk and the second plurality of rotor blades 34 rotate through a second rotor disk. In some embodiments, the aircraft 10 further includes a translational thrust system 40 having a propeller 42 located at the extending tail 14 to provide translational thrust (forward or rearward) for aircraft 10.

Translational thrust system 40 may be mounted to the rear of the airframe 12 to provide thrust for high-speed flight. While shown in the context of a pusher-prop configuration, it is understood that the propeller 42 could also be a more conventional puller prop or could be variably facing so as to provide yaw control in addition to, or instead of, translational thrust. It should be understood that any such system or other translational thrust systems may alternatively or additionally be utilized. Alternative translational thrust systems may include different propulsion forms, such as a jet engine.

In accordance with an aspect of an exemplary embodiment, propeller blades 43 of translational thrust system 40 may include a variable pitch. More specifically, the pitch of propeller blades 43 may be altered to change the direction of thrust (e.g., forward or rearward). In accordance with another aspect of an exemplary embodiment, extended tail 14 includes a tail section 50 including starboard and port horizontal stabilizers 51 and 52. Tail section 50 also includes a vertical stabilizer 53 that extends downward from extending tail 14. Starboard horizontal stabilizer 51 includes a starboard active elevator 54 and a starboard active rudder 56. Similarly, port horizontal stabilizer 52 includes a port active elevator 58 and a port active rudder 60. Elevators 54 and 58 and rudders 56 and 60 act as controllable flight surfaces, e.g., surfaces that alter a flight path/characteristics of aircraft 10.

Propeller 42, or translational thrust system 40, is connected to, and driven by, the one or more engines 24 via a propeller gearbox 46. The propeller gearbox 46 is driven by the main rotor gearbox 26. The propeller gearbox 46 is capable of changing a gear ratio between the main rotor gearbox 26 and the propeller gearbox 46 so that the relative speeds between the main rotor gearbox 26 and the propeller gearbox 46 can be varied on command. The variable gear ratio of the propeller gearbox 46 controls how much speed and power are transmitted from the main rotor gearbox 26 to the propeller gearbox 46.

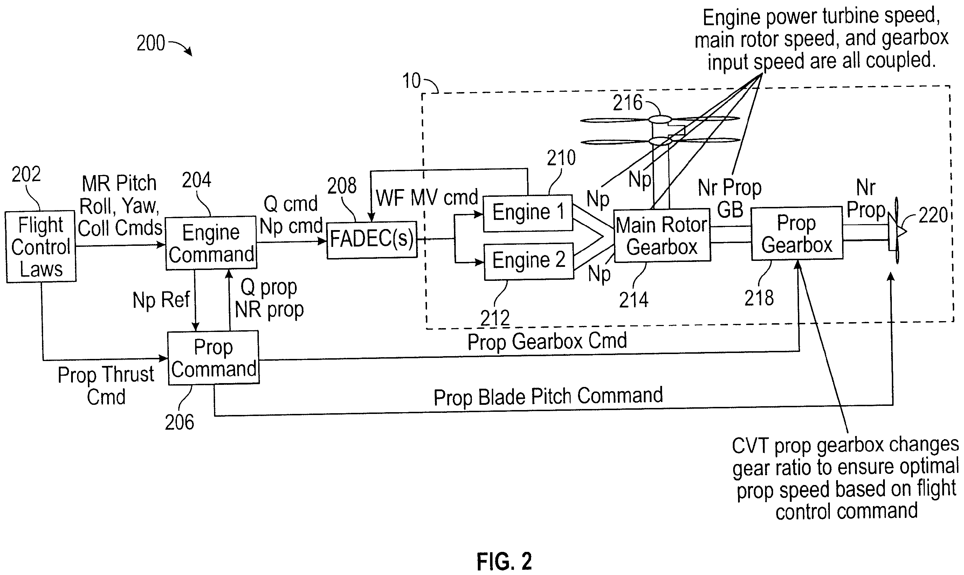

Aircraft 10 includes a flight control system 70 for controlling flight of the aircraft 10. In particular, the flight control system 70 includes a processor (not shown) that executes a flight control system that controls a gear ratio at the propeller gearbox 46 of the aircraft 10 in order to vary a speed ratio between the main rotor gearbox 26 and the propeller gearbox 46. A detailed discussion of the flight control system 70 is provided below with respect to FIG. 2.

FIG. 2 shows a schematic diagram of a flight control system 200 for providing a variable speed transmission to a rotary-wing aircraft such as the exemplary aircraft 10 of FIG. 1. The flight control system 200 includes a flight control laws module 202, an engine command module 204, a propeller command module 206 and a full authority digital engine control (FADEC) 208, which can be operated on one or more processors of the flight control system 200. The hardware of aircraft 10 is represented in FIG. 2 by engine 1 (210), engine 2 (212) main rotor gearbox 214, main rotor 216, propeller gearbox 218 and propeller 220. The flight control laws module 202 receives pilot input from the pilot through various pilot interfaces, such as a cyclic, collective, pedals or any other suitable interface. The flight control laws module 202 receives the pilot input and determines various flight control commands to be applied at the aircraft 10 in order to implement the pilot input. For example, the flight control laws module 202 can determine flight commands for the main rotor 216 of the aircraft 10, such main rotor flight commands including pitch, roll and yaw of the main rotor 216 as well as collective commands, for example. Additionally, the flight control laws module 202 determines flight commands for the propeller 220, such as propeller thrust commands. The flight control laws module 202 provides the main rotor flight commands to the engine command module 204 and the propeller flight commands to the propeller command module 206.

The engine command module 204 receives the main rotor flight commands from the flight control laws module 202 and determines suitable torque (Q cmd) and rotor speed (Np cmd) commands for implementing the main rotor flight commands at the aircraft 10. The determined torque and rotor speed commands are provided to the FADEC 208, which implements the torque and rotor speed commands at at least one of engine 1 (210) and engine 2 (212). At least one of the engines (e.g., engine 1 (210)) may provide feedback to the FADEC 208 in order to enable the FADEC 208 regulate operation of the engines. One or more of engine 1 (210) and engine 2 (212) provides a selected turbine speed (Np) to the main rotor gearbox 214. The main rotor gearbox 214, powered at the selected turbine speed (Np), rotates the main rotor 216 of the aircraft 10 at a selected rotor speed (Nr). The main rotor 216 further provides an input speed to the propeller gearbox 216. It is to be noted that the engine power turbine speed (Np at engines 1 and 2), the main rotor speed (Nr) and the gearbox input speed from the main rotor 216 are all coupled or have a mathematical relation to each other.

In addition to rotating the rotor blades, the main rotor gearbox 214 is coupled to the propeller gearbox 218 and thereby provides power to the propeller gearbox 218. The activation of the propeller gearbox 218 provides a selected propeller speed (Nr Prop) to the propeller 220. The speed of the propeller gearbox 216 and therefore of the propeller blades 220 is controlled in part by the speed provided from the main rotor gearbox 214 and in part by a propeller gearbox command received from the propeller command module 206.

The propeller command module 206 controls operation of the propeller gearbox 218, specifically controlling the speed of the propeller gearbox 218 relative to the speed main rotor gearbox 214. In one embodiment, the propeller gearbox 218 changes a gear ratio as indicated by a propeller gearbox command provided by the propeller command module 206. The propeller command module 206 also controls a pitch of the blades of propeller 220. The propeller command module 206 receives a propeller thrust command from the flight control laws module 202 and provides a propeller gearbox command to the propeller gearbox 218 and a propeller blade pitch command to the propeller 220. The propeller gearbox command and the propeller blade pitch command are determined at least in part based on the propeller thrust command. The propeller gearbox command controls a gear ratio of the propeller gearbox 218 and therefore controls a speed of the propeller gearbox 218 relative to the speed of the main rotor gearbox 214. Therefore, the speed of the propeller gearbox 218 relative to the speed of the main rotor gearbox 214 can be varied as desired. The propeller gearbox 218 can change a gear ratio in response to the propeller gearbox command in order to obtain an optimal or selected propeller speed (Nr prop) at the propeller gearbox 218. The propeller blade pitch command controls a pitch of a blade of the propeller 220.

The engine command module 204 and the propeller command module 206 communicate information to each other. The communication information can be used by the engine command module 204 and the propeller command module 206 to determine their respective output. For example, the engine command module 204 provides a main rotor turbine speed reference value to the propeller command module 206 and the propeller command module 206 can determine a suitable propeller gearbox command as well as the propeller blade pitch command based, at least in part, on the main rotor turbine speed reference value. In addition, the propeller command module 206 can provide a propeller rotor speed and propeller torque to the engine command module 204. The engine command module 204 can determine the main rotor torque and main rotor turbine speed based, in part, on the propeller rotor speed and propeller torque provide from the propeller command module 206.

In various aspects, the propeller gearbox 218 includes the elements of a variable speed transmission therein for controlling gear ratios, gear speeds, etc., in response to a propeller gearbox command. In alternate embodiments, the variable speed transmission can be a separate component of the aircraft that is mechanically connected to the main rotor gearbox 214 as well as to the propeller gearbox 218 and receives the propeller gearbox command from the propeller command module 206 in order to vary power transfer, speed transfer, gear ratios, etc.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

## Claims

1. A rotary-wing aircraft, comprising:
a main rotor;
a propeller;
a variable speed transmission for transferring power from the main rotor to the propeller; and
a propeller command module that controls operation of the variable speed transmission.

2. The rotary-wing aircraft of claim 1, wherein the propeller command module provides a command to the variable speed transmission to control the operation of the variable speed transmission.

3. The rotary-wing aircraft of claim 1 or 2, further comprising a main rotor gearbox associated with the main rotor and a propeller gearbox associated with the propeller, wherein the propeller command module provides a propeller gearbox command to the propeller gearbox to vary a speed ratio between the main rotor gearbox and the propeller gearbox.

4. The rotary-wing aircraft of claim 3, wherein varying the speed ratio further comprises varying a gear ratio between the main rotor gearbox and the propeller gearbox.

5. The rotary-wing aircraft of claim 4, wherein the propeller command module further generates a propeller gearbox command to control the gear ratio between the main rotor gearbox and propeller gearbox.

6. The rotary-wing aircraft of one of claims 1-5, wherein the propeller command module further generates a propeller blade pitch command.

7. The rotary-wing aircraft of one of claims 3-6, wherein the propeller command module receives a main rotor turbine speed reference value and generates the propeller gearbox command based, at least in part, on the main rotor turbine speed reference value.

8. The rotary-wing aircraft of one of claims 1-7, wherein the propeller command module provides at least one of a propeller rotor speed and a propeller torque to an engine command module.

9. A system for controlling a flight of a rotary-wing aircraft, comprising:
a variable speed transmission for transferring power from a main rotor of the aircraft to a propeller of the aircraft; and
a propeller command module that controls operation of the variable speed transmission to vary a transfer of power from the main rotor to the propeller.

10. The system of claim 9, wherein the propeller command module provides a command to the variable speed transmission to control the operation of the variable speed transmission.

11. The system of claim 9 or 10, wherein the aircraft further includes a main rotor gearbox associated with the main rotor and a propeller gearbox associated with the propeller, wherein the propeller command module provides a propeller gearbox command to the propeller gearbox to vary a speed ratio between the main rotor gearbox and the propeller gearbox.

12. The system of claim 11, wherein the speed ratio further comprises a gear ratio between the main rotor gearbox and the propeller gearbox.

13. The system of claim 12, wherein the propeller command module generates a propeller gearbox command to control the gear ratio between the main rotor and propeller.

14. The system of one of claims 9-13, wherein the propeller command module further generates a propeller blade pitch command.

15. The system of one of claims 11-14, wherein the propeller command module generates the propeller gearbox command based, at least in part, on a reference turbine speed of the main rotor.
